# EUROPEAN PATENT APPLICATION

(11) **EP 2 124 008 A1**
(43) Date of publication of application: **25.11.2009**
(21) Application number: 07831539.7
(22) Date of filing: 09.11.2007
(51) Int. Cl.: F28D 7/10, F17C 5/06, F17C 13/00, F28D 1/02, F28D 1/06

(54) **HEAT EXCHANGER**

(30) Priority: 19.12.2006 JP 2006341310; 27.12.2006 JP 2006350765; 21.08.2007 JP 2007214845
(71) Applicant: Taiyo Nippon Sanso Corporation, Shinagawa-ku Tokyo 142-8558 (JP)
(72) Inventor: KUWANO, Toshiaki, Tokyo 142-8558 (JP); OOMORI, Kanji, Tokyo 142-8558 (JP)
(74) Representative: Waldren, Robin Michael
(86) International application number: PCT/JP2007/071808
(87) International publication number: WO 2008/075509

(57) **Abstract**

A heat exchanger of the present invention is for cooling a high-pressure gas, and includes: a frame in which a single curved cooling medium flow path is formed by providing a plurality of partitioning plates parallel to one another; a single curved cooling pipe that is provided inside the cooling medium flow path via a space interval, wherein a cooling medium is flowed through the cooling medium flow path, and the high-pressure gas is flowed through the cooling pipe.

## Description

### TECHNICAL FIELD

The present invention relates to a heat exchanger for cooling a high-pressure gas or other such gas. More specifically, the present invention relates to a heat exchanger that is employed when filling a tank with hydrogen gas that serves as fuel in a hydrogen vehicle.
Priorities are claimed on Japanese Patent Application No. 2006-341310, filed December 19, 2006, Japanese Patent Application No. 2007-214845, filed August 21, 2007, and Japanese Patent Application No. 2006-350765, filed December 27, 2006, the contents of which are incorporated herein by reference.

### BACKGROUND ART

Hydrogen vehicles (a fuel cell vehicle and a hydrogen engine vehicle) employ hydrogen gas as fuel, and the development of these vehicles as the next generation of automobiles has been progressing. Hydrogen vehicles exhaust low amounts of carbon dioxide gas, NOx, SOx, and the like, and have low environmental impact as they expel only water.
As in the case of a typical gasoline car, when supplying fuel, hydrogen vehicles proceed to a supply location equipped with a fuel supplying device (dispenser) for filling the tank with the hydrogen gas fuel, and the hydrogen gas is supplied from this fuel supplying device thereto.

In general, when pressurized natural gas or other high-pressure gases (nitrogen gas, oxygen gas, etc.) are subjected to adiabatic expansion from a pressurized state (pressure of 35 MPa, for example), the temperature of the gas falls due to the Joule Tompson effect.
However, unlike typical gases, it is a characteristic property of hydrogen gas that its temperature increases due to the Joule-Thomson effect. For this reason, the temperature tends to rise when hydrogen gas passes through equipment such as valves.
When filling a fuel tank with hydrogen gas, it is desirable to fill the tank over a short period of time. However, this can be problematic as the temperature of the gas readily increases due to the increase in temperature caused by the adiabatic compression that accompanies rapid filling of the fuel tank with the hydrogen gas.

In order to reduce weight, a fiber-reinforced plastic (FRP) container is typically used for the fuel tank in a hydrogen vehicle. From the perspective of durability, the upper limit for the working temperature of a fuel tank formed of FRP is typically designed to be around 85°C.
Since there is an upper limit for the working temperature in a fuel tank formed of FRP, strict temperature management is necessary when carrying out hydrogen gas fueling.

A fuel tank must not be filled with hydrogen gas when its design temperature is exceeded. Once a full tank has been detected using pressure surveillance, and fueling is brought to an end, the pressure inside the tank falls as the temperature inside the fuel tank decreases after filling. This means that the maximum filling amount (weight) that can be applied to the tank becomes less than appearance would suggest. Accordingly, this has a great impact on the travel distance per full tank for the hydrogen vehicle.

In particular, once the filling pressure of the hydrogen gas becomes 70 MPa, it becomes difficult to maintain a balance between rapid filling and the increase in temperature simply by controlling filling speed, and some sort of cooling device has been needed.
Moreover, the higher the filling pressure, the larger the thermal capacity becomes due to the increase in the thickness of the pipes, pipe couplings, and valves. This is problematic as the cooled hydrogen gas is disadvantageously warmed by the pipes and pipe couplings when cooling of the filling line is started after filling begins. As a result, it is not possible to achieve the initial objective with respect to filling of the fuel tank.

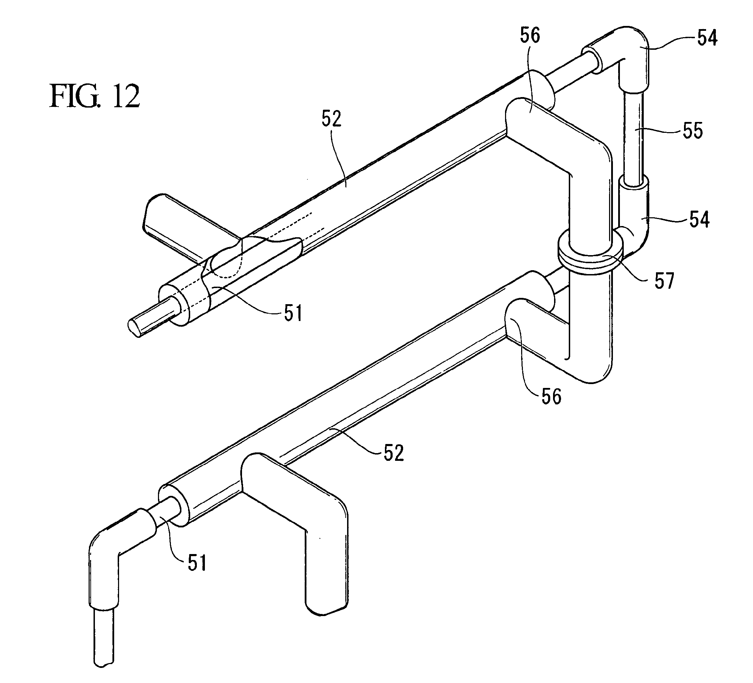

FIG. 12 shows the essential parts of a heat exchanger for cooling a high-pressure hydrogen gas which is employed during conventional high-pressure hydrogen gas filling. This heat exchanger is housed inside a frame, not shown in the figures, and has a double pipe structure.
In this heat exchanger, heat exchange is carried out by flowing hydrogen gas into an inner pipe 51, and flowing a cooling medium such as brine in between the inner pipe 51 and an outer pipe 52. It is preferable that the heat exchanger be compact. However, in order for the heat exchanger to be compact, it is necessary to increase the heat transfer area of the heat exchanger. The inner pipe 51 therefore has multiple bends within the frame, to provide a replication design.

Further, since high-pressure hydrogen gas flows through the inner pipe 51, a stainless steel pipe or the like having a thick wall is employed. Since the fixed length of a pipe material such as a thick stainless steel pipe is 2 m, a reciprocating structure is achieved for the inner pipe 51 by connecting such a fixed length straight pipe to a U-shaped bent pipe, or, as shown in FIG. 12, by connecting the fixed length straight pipes which serve as inner pipe 51 to elbows 54, 54 and a short pipe 55.
Such methods as welding or screwing may be employed as the method of connection.
It is inevitable that heat exchangers having this type of structure will have joint seams. Accordingly, since high-pressure hydrogen gas flows inside the inner pipe 51, the High Pressure Gas Safety Act requires periodic inspection to ensure that there are no leaks from these joint seams.

For this reason, a single straight pipe in which there are no joint seams is employed for the inner pipe 51 of the heat exchanger. An outer pipe 52 is provided external to the inner pipe 51, in a unitary manner therewith, to form a double pipe. Double pipe sections are then connected in a unitary manner via a bent piece formed only of the inner pipe 51. As a result, the joint seams are open to exposure, making inspection easy.
However, this approach has been problematic in that efficiency is poor since heat exchange with the cooling medium does not take place at the joint seams.

In addition, it is necessary to continuously flow the cooling medium in the double pipes. Accordingly, a design is provided in which a branching piece 56 is provided to an area on each of the outer pipes 52, and connections are made with the branching piece 56. The outer pipe 52 has a larger diameter than that of the inner pipe 51, so that the radius of its bent section is larger than the radius of the bent section of the inner pipe 51. From the perspective of maintenance, the connection between an outer pipe 52 and an outer pipe 52 is made using a flange 57. This is problematic as the space between an outer pipe 52 and an outer pipe 52 becomes wider, and the size of the heat exchanger becomes larger.
[Patent Document 1]
   Japanese Unexamined Patent Application, First Publication No. 2004-116619

### DISCLOSURE OF THE INVENTION

### PROBLEMS TO BE SOLVED BY THE INVENTION

The present invention was completed in view of the above-described circumstances and has an objective to provide a heat exchanger which is provided along the path for filling a tank with hydrogen gas in a hydrogen vehicle, etc., and which is downsized and has a large heat transfer area.

### MEANS TO SOLVE THE PROBLEMS

In order to resolve the above problems,
the first aspect of the present invention is a heat exchanger for cooling a high-pressure gas, including: a frame in which a single curved cooling medium flow path is formed by providing a plurality of partitioning plates parallel to one another;
a single curved cooling pipe that is provided inside the cooling medium flow path via a space interval, wherein
a cooling medium is flowed through the cooling medium flow path, and the high-pressure gas is flowed through the cooling pipe.

In the first aspect of the present invention, it is preferable that a fin that extends along the longitudinal direction of the pipe be provided on the pipe.
Further, in the first aspect of the present invention, it is preferable that the frame be comprised of a main body and a cover which covers the main body, and the plurality of partitioning plates be provided to the main body or the cover.

The second aspect of the present invention is a heat exchanger for cooling a gas, including: a container for holding a cooling medium; and a block body which is provided inside the container and within which a gas flow path for flowing gas is formed, wherein
the block body has a metal body in which a plurality of through holes are formed to cross one another, in which one of the openings of the through holes is designated as a gas entrance port, another opening is designated as a gas exit port, and the other openings are sealed, with the through holes constituting the gas flow path.

In the second aspect of the present invention, it is preferable that the aforementioned metal body be a plate member.
Further, in the second aspect of the present invention, it is preferable that a temperature sensor be attached to one of the through holes in the block body.

### EFFECT OF THE INVENTION

In the heat exchanger according to a first aspect of the present invention, roughly the entire length of the pipe, through which the high-pressure gas to be cooled flows, is positioned inside the cooling medium flow path. As a result, it is possible to increase the heat transfer area and to effectively downsize the heat exchanger.
Further, when a fin is provided to the pipe, the heat transfer area is even further increased, making it possible to realize an even smaller heat exchanger.

The frame is comprised of a main body and a cover. By providing an arrangement in which a plurality of partitioning plates are provided to the main body or cover, the cover can be removed as needed, and an on-the-spot inspection of the pipe in which high-pressure gas is flowing can be easily conducted.
Further, the structure is simple, so the production is easy and can be done at low cost.

In the heat exchanger according to a second aspect of the present invention, the block body which carries out heat exchange is comprised of a metal body in which multiple through holes are formed. As a result, heat exchanger is carried out throughout the entire block body. In other words, the heat transfer area is increased, the efficiency of heat exchange is high, and the heat exchanger can be downsized. For this reason, it becomes possible to efficiently cool hydrogen gas or the like by soaking the block body in an ultra-low temperature cooling medium such as liquid nitrogen stored inside a container.
Further, the structure is simple, so the production is easy and can be done at low cost.

### BRIEF DESCRIPTION OF THE DRAWINGS

Fig. 1 is a partial cut-away schematic perspective view showing an example of the heat exchanger according to a first aspect of the present invention.
Fig. 2 is a partial cut-away schematic plan view showing an example of the heat exchanger according to a first aspect of the present invention.
Fig. 3 is a schematic perspective view showing another example of the heat exchanger according to a first aspect of the present invention.
Fig. 4 is a schematic perspective view showing another example of the heat exchanger, with a portion thereof omitted, according to a first aspect of the present invention.
Fig. 5 is a schematic structural view showing the device for high-pressure hydrogen gas filling which employs the heat exchanger according to a first aspect of the present invention.
Fig. 6 is a schematic structural view showing an example of the heat exchanger according to a second aspect of the present invention.
Fig. 7A is a figure showing the external appearance of one example of the block body in the second aspect of the present invention.
Fig. 7B is a figure showing the external appearance of one example of the block body in the second aspect of the present invention.
Fig. 8 is a cross-sectional view showing the internal structure of one example of the block body in the second aspect of the present invention.
Fig. 9 is a schematic structural view showing the device for filling a tank with high-pressure hydrogen gas which employs the heat exchanger according to a second aspect of the present invention.
Fig. 10 is a schematic structural view showing another example of the device for filling a tank with high-pressure hydrogen gas which employs the heat exchanger according to a second aspect of the present invention.
Fig. 11 is a schematic structural view showing another example of the device for filling a tank with high-pressure hydrogen gas filling employs the heat exchanger according to a second aspect of the present invention.
Fig. 12 is a perspective view showing the essential components of a conventional heat exchanger that uses hydrogen gas.

### DESCRIPTION OF THE REFERENCE SYMBOLS

1 represents a frame, 2 represents a main body, 3 represents a cover, 4 represents a partitioning plate, 5 represents a cooling medium flow path, and 6 represents a cooling pipe.
111 represents a heat exchanger, 112 represents a container, 113 represents a block body, 116 represents a through hole, 117 represents a gas entrance port, and 118 represents a gas exit port.

### BEST MODE FOR CARRYING OUT THE INVENTION

The heat exchanger according to a first aspect of the present invention will now be explained.

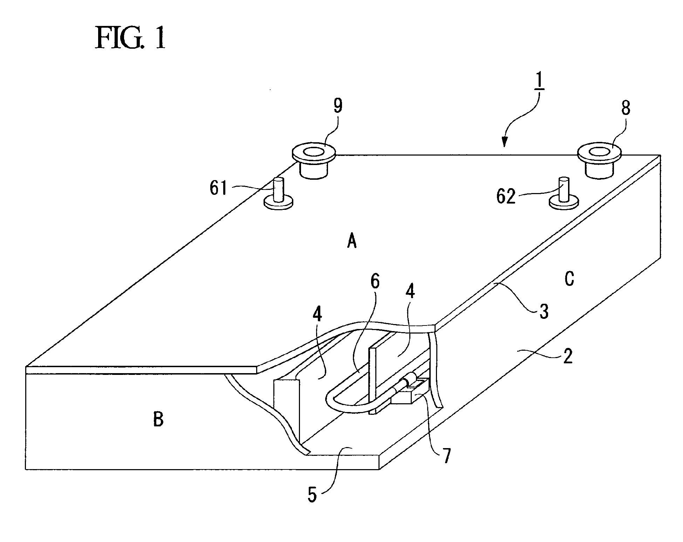

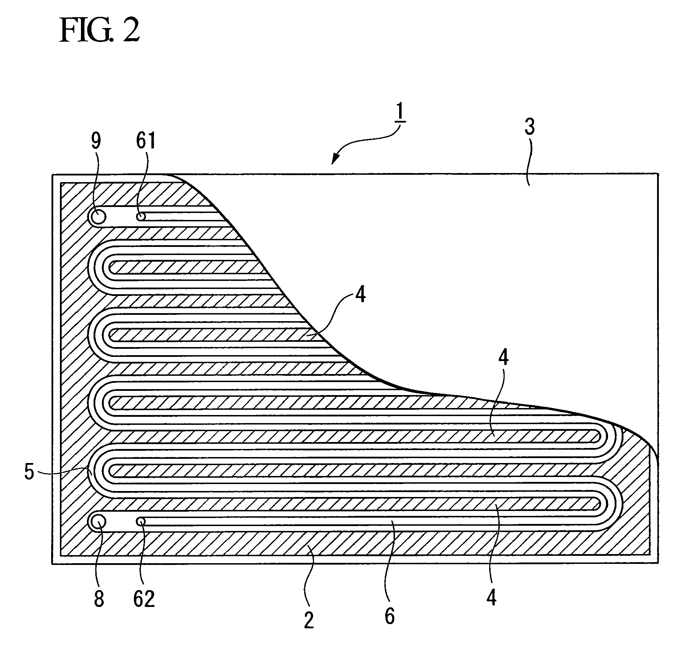

Figs. 1 and 2 show an example of the heat exchanger according to a first aspect of the present invention.
In Figs. 1 and 2, the numeric symbol 1 represents the frame.
This frame 1 is in the form of a sealed box formed of a metal such as stainless steel or the like, and is comprised of a main body 2 and a cover 3.

The main body 2 is in the form of a rectangular tray, and has a wide opening. This opening is designed to be covered with a flat plate-like cover 3. This cover 3 is attached in a liquid-tight manner via packing (omitted from the figures) to the main body 2 by means of screws not shown in the figures. The cover 3 is designed to be removable from the main body 2 as needed.

A plurality of metal partitioning plates 4, 4··· is provided inside the main body 2. These partitioning plates 4 are provided along the longitudinal direction of the main body 2 roughly parallel to one another with an interval of spacing therebetween, and are installed to extend upright from the bottom portion of the main body 2.
One end of the partitioning plate 4 along its longitudinal direction is directly connected to one of the side walls of the main body 2, while the other end of this partitioning plate 4 does not extend to the other side wall of the main body 2, but is left with an interval of spacing between itself and the wall.

Further, a design for the connection of these partitioning plates 4 to the side walls of the main body 2 is provided such that the connection of adjacent partitioning plates 4, 4 alternates between the opposing side walls.
In addition to welding, the connection of the plurality of partitioning plates 4, 4··· and the main body 2 can be accomplished by grinding and molding a rectangular block to form a unitary body including the main body 2 and the plurality of partitioning plates 4, 4···. Note that it is also acceptable that the plurality of partitioning plates 4, 4··· not be connected to the main body 2 in a unitary manner, but are fixed to the inner surface of the cover 3 by welding, etc.
As a result of the above design, a single, winding-road-like, continuous bending flow path is formed inside the main body 2, this flow path constituting cooling medium flow path 5 through which the cooling medium flows.

A single cooling pipe 6, through which the high-pressure gas to be cooled flows, is provided inside this cooling medium flow path 5. This cooling pipe 6 is provided with an interval of space separating it from the various partitioning plates 4, the bottom portion of the main body 2, and the cover 3, so as to be positioned roughly in the center of the cooling medium flow path 5. The overall contour of the cooling pipe 6 is a winding-road-like bending shape to follow the contour of the cooling flow path 5.
The support for the cooling pipe 6 inside the cooling medium flow path 5 is carried out by means of a plurality of support bases 7, 7··· which are attached to the bottom portion of the main body 2. Note that support bases 7, 7··· are omitted from Fig. 2.

The cooling pipe 6 is formed by connecting a straight pipe and a U-shaped bent pipe. This connection is carried out by means of butt welding, socket welding using a pipe coupling, or the like. However, butt welding, in which the diameters of the connection sites do not increase after connection, is preferable as with this method there is no disturbance to the flow of the cooling medium in the cooling medium flow path 5, the flow path does not become narrower, and there is no increase in the resistance to flow of the cooling medium.
It is also acceptable that a cooling pipe 6 that has the same contour is provided by bending a long straight pipe to form curved portions.

A cooling medium entrance port 8, for introducing cooling medium into the cooling medium flow path 5, and a cooling medium exit port 9, for withdrawing the cooling medium from the cooling medium flow path 5, are formed at positions corresponding to the beginning and ending of the cooling medium flow path 5 on cover 3. Further, openings are formed in the cover 3 at positions corresponding to the beginning and ending of the cooling pipe 6. The beginning part 61 and the ending part 62 of the cooling pipe 6 are inserted into these openings in the cover 3 in a liquid-tight manner via packing, and are directed to the outside.

During the use of this heat exchanger, a cooling medium such as brine or the like is flowed through the cooling medium flow path 5 from the cooling medium entrance port 8, and is withdrawn from the cooling medium exit port 9. At the same time, the high-pressure hydrogen or other such gas which is to be cooled is flowed via the beginning part 61 of the cooling pipe 6 into the cooling pipe 6, and is withdrawn from the ending part 62. In order to increase the efficiency of heat exchange of this heat exchanger, the direction of flow of the cooling medium and the direction of flow of the gas run counter-current to one another.

In this type of heat exchanger, almost the entire length of the cooling pipe 6 is present inside the cooling medium flow path 5. Therefore, the entirety of the cooling pipe 6 contributes to heat exchange, and the heat transfer area is increased. As a result, the heat exchanger can be downsized. Further, the cover 3 can be removed, and the cooling pipe 6 within the frame 1 can be exposed. Thus, it is possible to easily observe and inspect the connection sites.

In this example, a valve can be provided in the bottom portion of the frame 1 for use when removing the cooling medium. Moreover, a valve can be provided in the cover 3 for expelling the air which inflows during initial operation.
In addition, it is also acceptable to increase the heat transfer area by providing one or more fins that extend in the longitudinal direction of the cooling pipe 6 on the peripheral of the cooling pipe 6.

In this example of the heat exchanger, the cover 3 of the frame 1 forms the surface area A of the frame 1. However, depending on the facilities when using the heat exchanger, it is also acceptable to use the cover 3 to form the surface area B or the surface area C of the frame 1. In this case, the partitioning plates 4, 4··· and the cooling pipe 6 are connected or supported in a unitary manner to the side walls forming the surface area A of the frame 1. Then, the cooling pipe 6 is exposed by removing the cover 3, enabling inspection of the cooling pipe 6.

Further, a temperature sensor for measuring the temperature of the cooling medium may be provided to the cooling medium entrance port 8. By controlling the flow rate of gas flowing in the cooling pipe 6 based on the temperature of the cooling medium measured by this heat sensor, it is possible to cool the gas to a specific temperature.

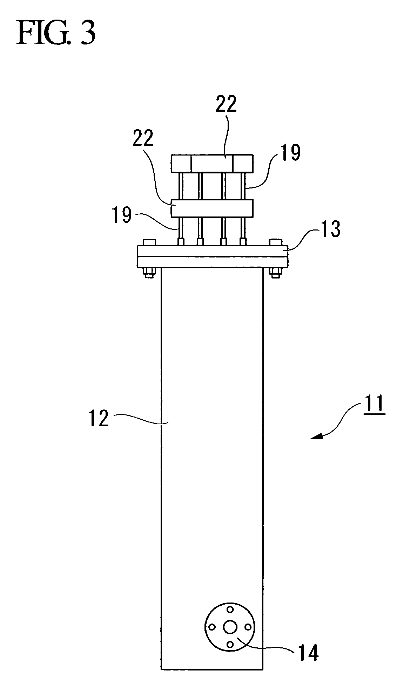

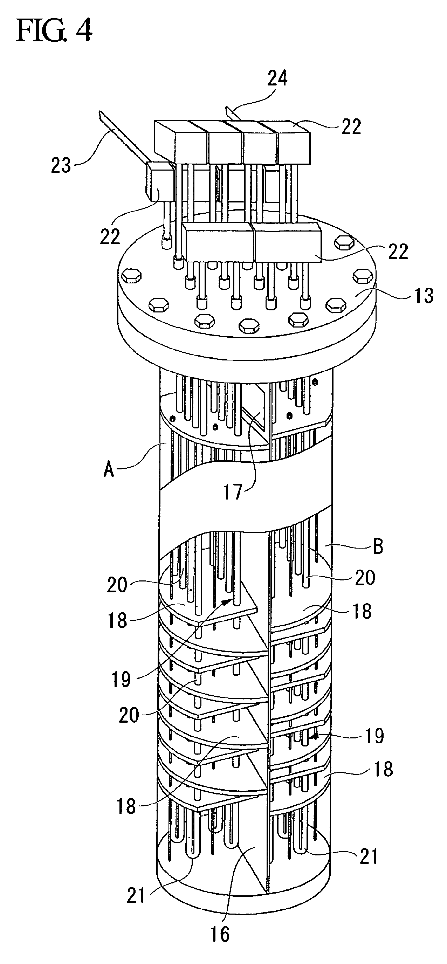

Figs. 3 and 4 show another example of the heat exchanger according to the present invention. In these examples, the heat exchanger has an overall cylindrical shape.
In this example, frame 11 is cylindrical. The main body 12 that forms frame 11 is cylindrical and has a bottom. The cover 13 that covers the circular opening of the main body 12 is in the form of a circular plate.
Note that Fig. 4 shows the heat exchanger without showing the cylindrical portion of the main body 12 in order to explain the inside of the main body 12.

A cooling medium entrance port 14 and a cooling medium exit port (hidden in Fig. 3) are provided near the bottom portion of the main body 12 on opposite sides of the outer peripheral surface of the main body 12. A separating plate 16, which forms a space A and a space B by roughly dividing the space inside the main body 12 along the longitudinal direction, is provided from the bottom portion of the main body 12 toward the opening. An opening 17 is formed near the opening of the main body 12 of the separating plate 16, with the divided spaces A and B communicating at that point.

In the spaces between the inner surface of the wall of the main body 12 and either side of the separating plate 16, a plurality of partitioning plates 18,18... are attached in parallel with spacing therebetween. The planar profile of this partitioning plate 18 constitutes a semi-circle with a cut-out portion. These cut-out portions are disposed so as to be positioned on alternate sides of adjacent partitioning plates 18,18.... The partitioning plates 18,18... are similarly disposed in space A and space B as shown in the figure. However, it is acceptable that the position of attachment along the longitudinal direction of main body 12 varies slightly.

By providing this type of partitioning plates 18, 18···, a single cooling medium flow path is formed in which the cooling medium that has inflowed from the cooling medium entrance port 14 flows toward the opening in a zig-zag pattern through the cut-out portions of the partitioning plates 18, 18··· in space A, passes through the open portion 17 of the separating plate 16 and flows into the other space B, and then flows toward the bottom portion in a zig-zag pattern through the cut-out portions of the partitioning plates 18, 18··· in space B, to reach the cooling medium exit port.

A single cooling pipe 19 is provided from the space A to the space B inside the main body 12. This cooling pipe 19 is composed of a plurality of straight pipes 20, 20··· and a plurality of U-shaped pipes 21, 21···, These straight pipes 20, 20··· and U-shaped pipes 21, 21··· are alternately connected to form a single continuous pipe.
The plurality of straight pipes 20, 20··· are provided passing through the plurality of partitioning plates 18, 18 in respective spaces A, B, and through cover 13. Half of the U-shaped pipes 21, 21··· are disposed near the bottom portion of the main body 12, and the remainder of U-shaped pipes 21, 21··· are disposed above the cover 13. These latter U-shaped pipes are housed in a coupling case 22.

The beginning part 23 and the ending part 24 of the cooling pipe 19 are designed to extend outward from the coupling case 22, and the gas to be cooled is introduced from the beginning part 23 and withdrawn from the ending part 24.
In this example of the heat exchanger, a cooling medium such as brine is flowed from the cooling medium entrance port 14 toward the cooling medium exit port, and the hydrogen or other such gas to be cooled is flowed from the beginning part 23 toward the ending part 24 of the cooling pipe 19, thereby enabling cooling of the gas.
Further, in this example, almost the entire length of the cooling pipe 19 is present within the cooling medium flow path. As a result, the heat transfer area is increased, the efficiency of heat exchange is improved, and the heat exchanger can be downsized. Moreover, since the cover 13 can be removed and the cooling pipe 19 inside the frame 11 exposed, it is possible to easily observe and inspect this connection site.

Next, an explanation will be made of the method for using this type of heat exchanger to cool a high-pressure hydrogen gas to a specific temperature and to supply it to the fuel tank of a hydrogen vehicle to be filled, for example.

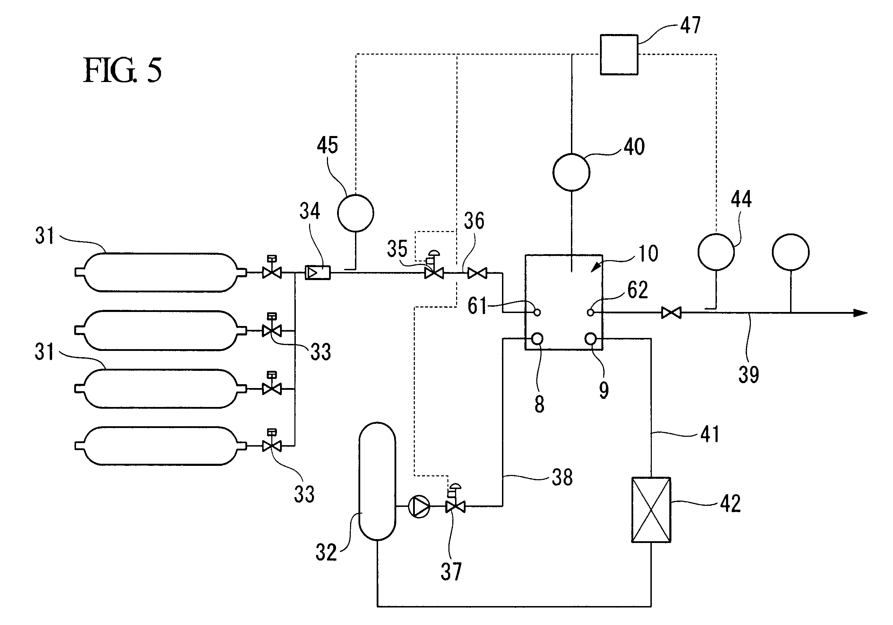

Fig. 5 shows an example of a device for carrying out this method.
This device is roughly comprised of hydrogen containers 31, 31··· for storing high-pressure hydrogen gas at ordinary temperature, a heat exchanger 10 as described above, and a storage tank 32 for storing a cooling medium such as brine or the like for use as the cooling medium.

The high-pressure hydrogen from the hydrogen containers 31 flows into the high-pressure pipe 36 via open/close valves 33, a flow meter 34, and a flow regulating valve 35, and is supplied to the beginning part 61 of the cooling pipe of the main body the heat exchanger 10.
Inside the main body of the heat exchanger 10, the cooling medium from the storage tank 32 is supplied via a flow regulating valve 37 and a pipe 38, and is sent from the cooling medium entrance port 8 of the heat exchanger 10 to the cooling medium flow path.

The cooling medium which has flowed through the cooling medium flow path of the heat exchanger 10 is withdrawn from the cooling medium exit port 9, travels through a pipe 41 and is sent to a refrigerator 42 where it is cooled and then circulated into the storage tank 32.
The hydrogen that has flowed through the cooling pipe of the heat exchanger 10 is cooled here, passes from the ending part 62 of the cooling pipe via a valve, and travels through a low temperature pipe 39, so as to be supplied to the hydrogen vehicle, etc. and to fill the tank.

The heat exchanger 10 is provided with a temperature sensor 40, a temperature sensor 44 for measuring the temperature of the hydrogen gas flowing through the low temperature pipe 39, and a temperature sensor 45 for measuring the temperature of the hydrogen gas flowing through the high-pressure pipe 36.
In addition, a controller 47 is provided for controlling the opening of the flow regulating valves 35, 37 based on the temperature signals from the temperature sensors 40,44,45.

The high-pressure gas at ordinary temperature in the hydrogen containers 31 is flowed into the cooling pipe of the heat exchanger 10 via the high-pressure pipe 36, cooled by heat exchange with the cooling medium inside the cooling medium flow path, passes through the low temperature pipe 39, and is supplied to the fuel tank of the hydrogen vehicle.
In this case, it is necessary to control the temperature of the hydrogen gas to a specific value since the hydrogen gas must be supplied to the fuel tank of the hydrogen vehicle at a specific temperature (-40°C, for example).

Specifically, the temperature of the cooling medium in the heat exchanger 10 is measured by the temperature sensor 40, and the temperature of the hydrogen gas inside the low temperature pipe 39 is measured by the temperature sensor 44. When the temperatures are below a specific value, control is carried out to make the opening of the flow regulating valve 35 larger and the opening of the flow regulating valve 37 smaller.
Conversely, when the temperatures are above a specific value, control is carried out to make the opening of the flow regulating valve 35 smaller and the opening of the flow regulating valve 37 larger.
As a result, it is possible to fill the fuel tank of the hydrogen vehicle, etc., while maintaining the high-pressure hydrogen gas at a specific temperature.
Note that the heat exchanger shown in Figs. 3 and 4 can be used in a similar way for cooling of a high-pressure hydrogen gas.

Next, the heat exchanger according to a second aspect of the present invention will be explained.

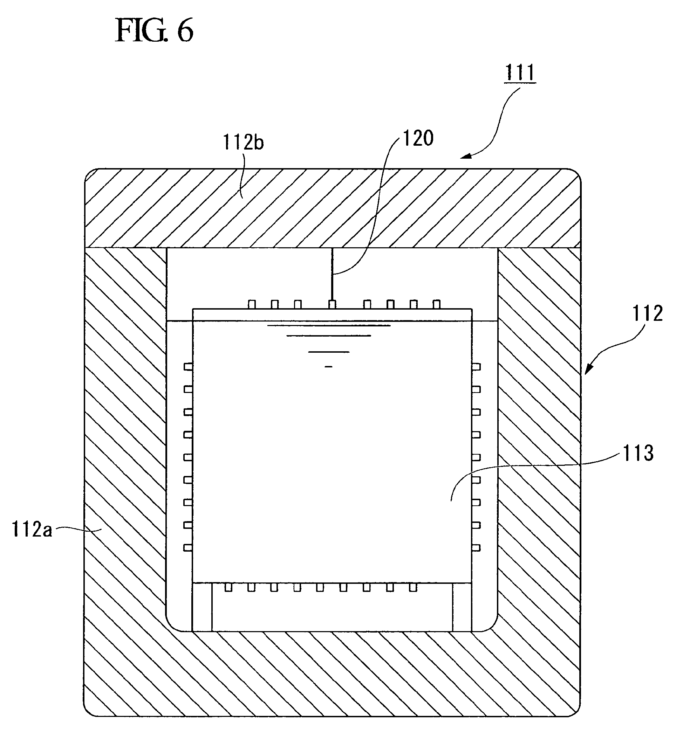

Figs. 6 through 8 show one example of the heat exchanger according to a second aspect of the present invention.
This example of the heat exchanger 111 is comprised of a container 112 for storing a cooling medium such as liquid nitrogen, and a block body 113 provided with a gas flow path.
This container 112 houses the block body 113 internally and is for soaking the block body 113 in the cooling medium. While its shape is not particularly restricted, a double walled vacuum container is preferred due to its superior thermal insulating properties. This container 112 is comprised of a container main body 112a and a cover 112b for covering the opening of the container main body 112a.

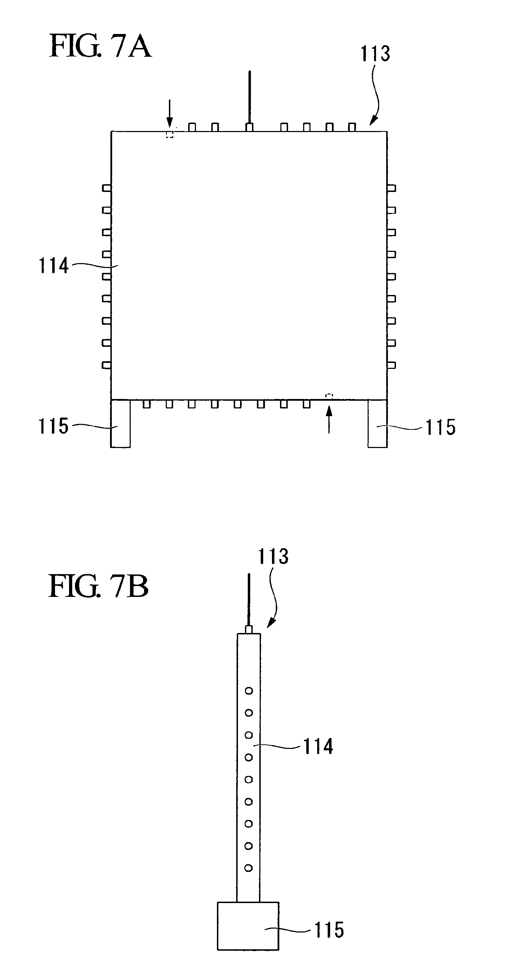

As shown in Figs. 7A and 7B, the block body 113 is provided with a metallic plate member 114, and two legs 115, 115 that support the plate member 114 to be installed upright inside the container main body 112a.
Among metals that cool hydrogen gas and have good thermal conductivity, stainless steel, aluminum, aluminum alloy, copper, copper alloy, tin, tin alloy, iron, and steel are preferred as a metal for plate member 114 due to their resistance to low temperature brittleness and hydrogen embrittlement.
As in the case of this example, the material for the plate member 114 of the block body 113 is not restricted to a plate-shaped material. Rather, a bulk in a rectangular, cubic, or other shape, which is formed of an unprocessed metal, is acceptable. However, a thin plate is preferable when taking into consideration the efficiency of heat exchange. It is also acceptable to provide a plurality of plate members 114.

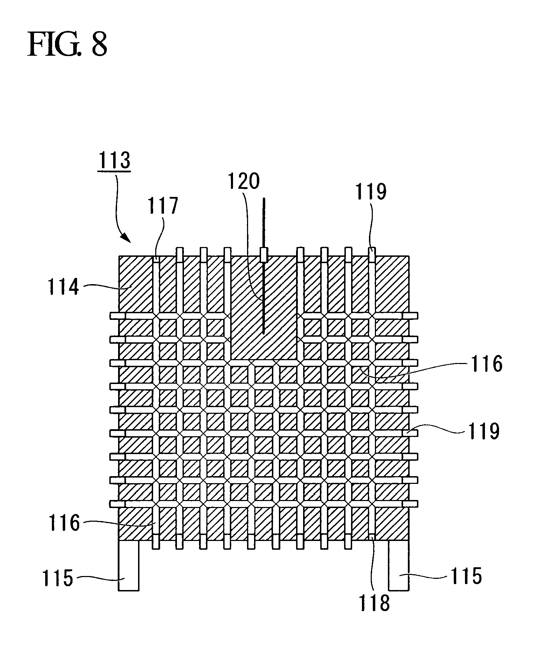

As shown in Fig. 8, multiple through holes 116, 116··· are provided in the vertical and horizontal directions at directions perpendicular to the thickness of the plate member 114. These through holes 116, 116··· are mutually perpendicular and communicate with one another at their points of intersection.

Through hole 116 may have various shapes in cross-section, such as round, triangular, etc. It is preferable that the diameter of through hole 116 be the maximum allowable at which the strength of the plate member 114 is still maintained, and is in the range of 10% to 80% of the thickness of the plate member 114.
By forming a plurality of such through holes 116, 116··· in plate member 114 in this way, two openings are generated per one through hole 116, and a plurality of openings are formed in plate member 114. From among these openings, one is designated as the gas entrance port 117, and the other remains as the gas exit port 118. The remainder of the openings is sealed in an air- and liquid-tight manner with plugs 119, 119···. The attachment of these plugs 119 is accomplished by welding or screwing.

Gas entrance port 117 and gas exit port 118 are designed to be openings which are maximally distanced from one another. In this example, they are positioned on plate member 114 on an approximately diagonal line.
As a result of the above structure, the various through holes 116, 116··· inside the plate member 114 form a single gas flow path having a gas entrance port 117 and a gas exit port 118.

In this example, a thermocouple 120 is embedded in the plate member 114 as a temperature sensor for measuring the temperature of the gas flowing through the gas flow path by measuring the temperature of the plate member 114. Through holes 116, 116··· are formed so as to avoid this thermocouple 120. However, it is not absolutely necessary that the thermocouple 120 avoid the through holes 116; rather thermocouple 120 may be disposed inside a through hole 116.
It is desirable that the volume of the gas flow path that is formed by the multiple through holes 116, 116··· have a maximum limit which still allows the strength of the plate member 114 to be maintained, and this volume is in the range of 10% to 80% of the volume of the plate member 114.

In a heat exchanger 111 designed in this way, the block body 113 is submerged in the cooling medium inside the container main body 112a. By flowing the gas to be cooled from the gas entrance port 117 into the gas flow path toward the gas exit port 118, the gas is cooled when it flows through the gas flow path.
Thus, the entire gas flow path contributes to heat exchange, so that the heat transfer area is increased, and the heat exchanger can be downsized with a higher efficiency of heat exchange. In addition, since the structure is simple, the heat exchanger can be produced easily at low cost.

Next, an explanation will be made of the method for using this type of heat exchanger to cool high-pressure hydrogen gas to a specific temperature, and to supply it to the fuel tank of a hydrogen vehicle to be filled, for example.

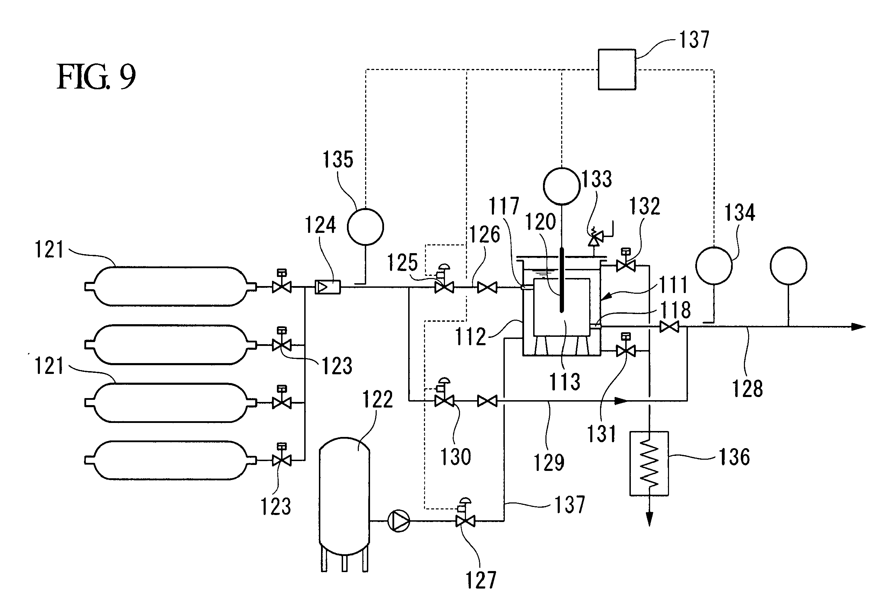

Fig. 9 shows an example of a supply and filling device for carrying out this type of supply and filling method.
This supply and filling device is roughly comprised of hydrogen containers 121... for storing high-pressure hydrogen gas at ordinary temperatures, a heat exchanger 111 as described, and an ultra-low temperature storage tank 122 for storing liquid nitrogen as the cooling medium.

The high-pressure hydrogen from the hydrogen containers 121 flows into the high-pressure pipe 126 via open/close valves 123, a flow meter 124, and a flow regulating valve 125, and is supplied to the gas entrance port 117 of the block body 113 of the heat exchanger 111.
Inside the container 112 of the heat exchanger 111, the liquid nitrogen from the ultra low-temperature storage tank 122 is supplied from the pipe 137 via the flow regulating valve 127, and cools the block body 113 inside the container 112. The hydrogen which flows through the gas flow path inside the block body 113 of the heat exchanger 111 is cooled here, passes from the gas exit port 118 of the block body 113 through the low temperature pipe 128 via a valve, and is supplied to the hydrogen vehicle, etc. to fill the fuel tank thereof.

A portion of the high-pressure hydrogen flowing through the high-pressure pipe 126 divides on the upstream side of the flow regulating value 125, flows through the bypass pipe 129, passes through the flow regulating valve 130, and mixes together in the low-temperature pipe 128.
A valve 131 for regulating the flow rate of liquid nitrogen, a valve 132 for removing vaporized nitrogen gas, a safety valve 133 and the like, are provided to the container 112 of the heat exchanger 111.
The block body 113 of the heat exchanger 111A is provided with a temperature sensor 120, a temperature sensor 134 for measuring the gas temperature at a point on the low temperature pipe 128 downstream from the site where the flow from the bypass pipe 129 joins together, and a temperature sensor 135 for measuring the temperature of the hydrogen gas flowing through the high-pressure pipe 126.

A portion of the liquid nitrogen inside the container 112 is vaporized as a result of cooling the hydrogen gas. This portion passes through an evaporator 136 via a valve 132, and is expelled outside the system.
In addition, a controller 137 is provided for controlling the opening of the flow regulating valves 125, 127, 130, based on the temperature signals from the temperature sensors 120, 134, 135.

The high-pressure hydrogen gas at ordinary temperatures inside the hydrogen containers 121 flows to the block body 113 of the heat exchanger 111 via the high-pressure pipe 126, and is cooled by heat exchange with the liquid nitrogen inside the container 112. The hydrogen gas then passes through the low-temperature pipe 128 and is supplied to the fuel tank of a hydrogen vehicle or the like.
In this case, it is necessary to control the temperature of the hydrogen gas to a specific value since the hydrogen gas must be supplied to the fuel tank of the hydrogen vehicle at a specific temperature (-40°C, for example). For this reason, a portion of the hydrogen gas at ordinary temperature is flowed into the bypass pipe 129, and then flowed directly into the low temperature pipe 128 without passing through the heat exchanger 111. This portion of hydrogen gas then mixes with the cooled hydrogen gas, to thereby carry out temperature adjustment.

Specifically, temperature sensor 120 measures the temperature of the block body 113 and temperature sensor 134 measures the temperature of the hydrogen gas in the low-temperature pipe 128 that lies downstream of the bypass pipe 129. When those temperatures are below specific values, the opening of the flow regulating valve 130 is made larger and the opening of the flow regulating valve 125 is made smaller.
Conversely, when those temperatures are above specific values, the opening of the flow regulating valve 130 is made smaller and the opening of the flow regulating valve 125 is made larger.
As a result, the fuel tank of a hydrogen vehicle or the like can be filled while maintaining the high-pressure hydrogen gas at a specific temperature.

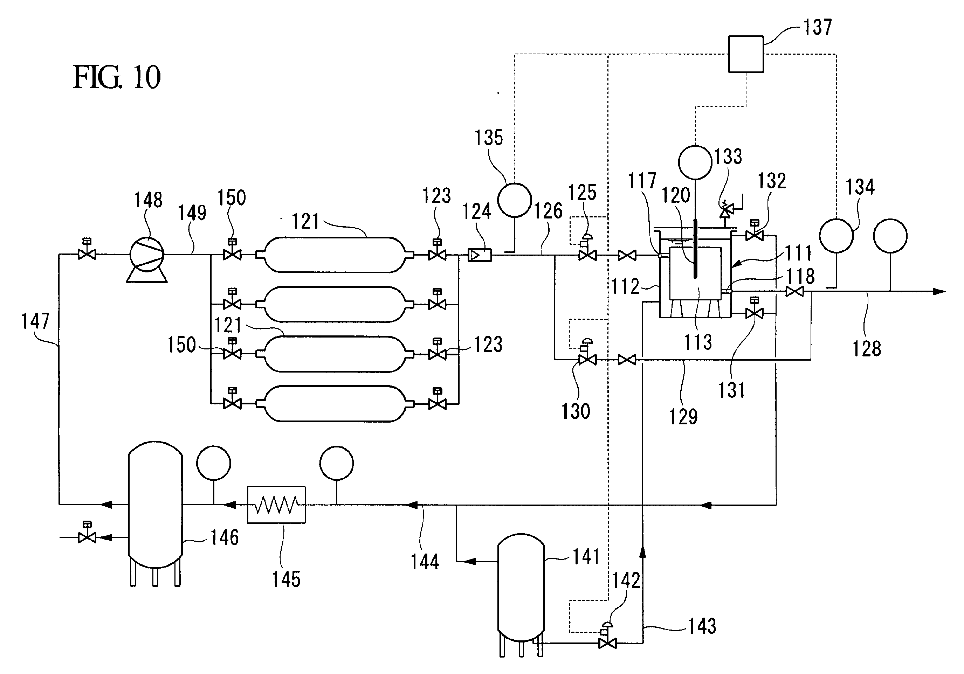

Fig. 10 shows another example of a supply and filling device for carrying out a high-pressure hydrogen gas supply and filling method. This example employs liquefied hydrogen as the cooling medium for the heat exchanger, and captures hydrogen gas generated by heat exchange and utilizes it in the supply and filling of a tank with hydrogen gas. Note that the same numeric symbol will be applied to compositional elements identical to the device shown in Fig. 9 and an explanation thereof will be omitted.

The high-pressure hydrogen from the hydrogen containers 121 flows into the high-pressure pipe 126 via open/close valves 123, a flow meter 124, and a flow regulating valve 125, and is supplied to the gas entrance port 117 of the block body 113 of the heat exchanger 111.
Inside the container 112 of the heat exchanger 111, the liquid hydrogen from the liquid hydrogen storage tank 141 is supplied as the cooling medium via the flow regulating valve 142 and a pipe 143, and cools block body 113.

The high-pressure hydrogen which flows through the gas flow path inside the block body 113 of the heat exchanger 111 is cooled here, passes from the gas exit port 118 of the block body 113 through the low temperature pipe 128 via a valve, and is supplied to the hydrogen vehicle, etc. to fill the fuel tank thereof.
A portion of the high-pressure hydrogen flowing through the high-pressure pipe 126 divides on the upstream side of the flow regulating value 125, flows through the bypass pipe 129, passes through the flow regulating valve 130, and mixes together in the low-temperature pipe 128.

A valve 131 for regulating the flow rate of liquid hydrogen, a valve 132 for removing vaporized hydrogen gas, a safety valve 133 and the like, are provided to the container 112 of the heat exchanger 111. The block body 113 of the heat exchanger 111 is provided with a temperature sensor 120, a temperature sensor 134 for measuring the gas temperature of the low temperature pipe 128 on the downstream side from the point where flow from the bypass pipe 129 joins together, and a temperature sensor 135 for measuring the temperature of the hydrogen gas flowing through the high-pressure pipe 126.
In addition, a controller 137 is provided for controlling the opening of the flow regulating valves 125, 130, 142, based on the temperature signals from the temperature sensors 120, 134, 135.

A portion of the liquid hydrogen in the container 112 of the heat exchanger 111 is vaporized due to cooling of the hydrogen gas. This hydrogen gas and a very small amount of accompanying liquid hydrogen pass through valve 132, mix with liquid hydrogen that has flowed out from the valve 131, and are sent to pipe 144 and evaporator 145. The accompanying liquid hydrogen is vaporized here and relayed as hydrogen gas to the hydrogen gas storage tank 146, where it is temporarily stored.
The hydrogen gas inside the hydrogen gas storage tank 146 passes through pipe 147, and is sent to a compressor 148 where it is pressurized. Next, this hydrogen gas passes through pipe 149 and valve 150 and is sent to hydrogen containers 121 where it is stored for reuse.

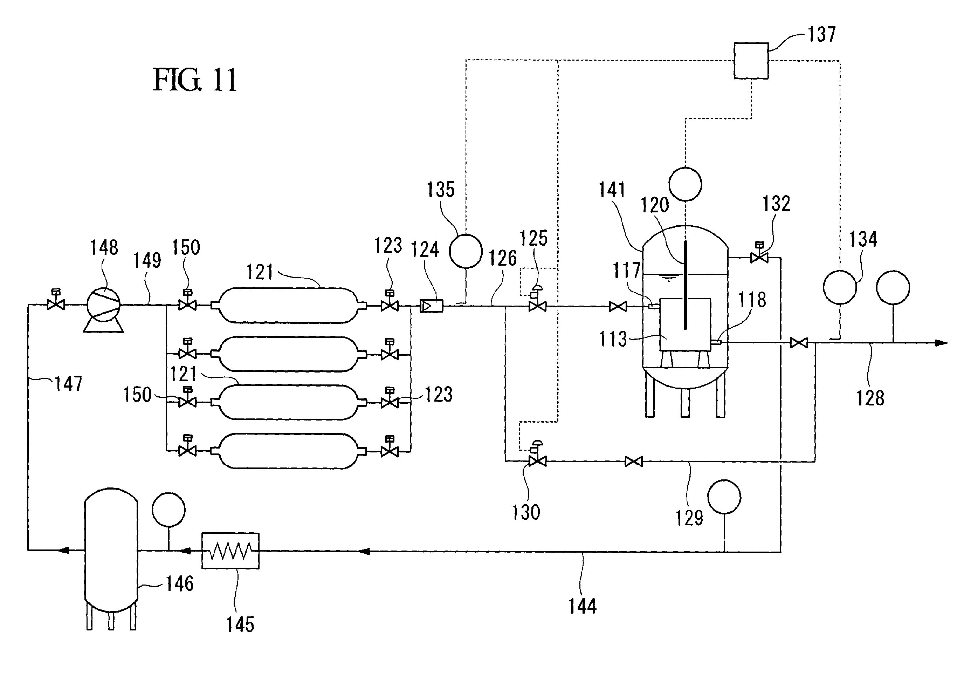

Fig. 11 is an example of a modification of the hydrogen gas supply and filling device shown in Fig. 10. In this example, a liquid hydrogen storage tank 141 is employed in place of the container 112 for holding the cooling medium for the heat exchanger 111. This hydrogen gas supply and filling device cools the block body 113 using the liquid hydrogen inside this liquid hydrogen storage tank 141, and cools the high-pressure hydrogen gas flowing through the gas flow path inside the block body 113. In other words, this hydrogen gas supply and filling device provides an arrangement for soaking the block body 113 in the liquid hydrogen inside the liquid hydrogen storage tank 141.

The hydrogen gas vaporized due to heat exchange inside the liquid hydrogen storage tank 141, along with a very small amount of accompanying liquid hydrogen, passes through the valve 132, travels through pipe 144 and evaporator 145, and is sent to the hydrogen gas storage tank 146 as hydrogen gas. It is temporarily stored here. Relay of the hydrogen gas to the hydrogen container 121 after it has been sent to the compressor and pressurized is equivalent that in device shown in Fig. 10.
In addition, a controller 137 is provided for controlling the opening of the flow regulating valves 125, 130 based on the temperature signals from the temperature sensors 120, 134, 135.

### INDUSTRIAL APPLICABILITY

The heat exchanger according to the present invention is able to cool hydrogen gas or the like with good efficiency, and thus has useful industrial applications.

## Claims

1. A heat exchanger for cooling a high-pressure gas, comprising:
a frame in which a single curved cooling medium flow path is formed by providing a plurality of partitioning plates parallel to one another;
a single curved cooling pipe that is provided inside the cooling medium flow path via a space interval, wherein
a cooling medium is flowed through the cooling medium flow path, and the high-pressure gas is flowed through the cooling pipe.

2. A heat exchanger according to Claim 1, wherein a fin that extends along the longitudinal direction of the pipe is provided on the pipe.

3. A heat exchanger according to Claim 1, wherein the frame is comprised of a main body and a cover which covers the main body, and the plurality of partitioning plates are provided to the main body or the cover.

4. A heat exchanger for cooling a gas, comprising:
a container for holding a cooling medium; and
a block body which is provided inside the container and within which a gas flow path for flowing gas is formed, wherein
the block body has a metal body in which a plurality of through holes are formed to cross one another, in which one of the openings of the through holes is designated as a gas entrance port, another opening is designated as a gas exit port, and the other openings are sealed, with the through holes constituting the gas flow path.

5. A heat exchanger according to Claim 1, wherein the metal body is a plate member.

6. A heat exchanger according to Claim 1 or Claim 2, wherein a temperature sensor is attached to one of the through holes in the block body.
